# EUROPEAN PATENT APPLICATION

(11) **EP 1 653 414 A2**
(43) Date of publication of application: **03.05.2006**
(21) Application number: 05110031.1
(22) Date of filing: 26.10.2005
(51) Int. Cl.: G07C 9/00

(54) **Data transmission apparatus and method**

(30) Priority: 26.10.2004 KR 2004085978
(71) Applicant: Samsung Electronics Co., Ltd., Suwon-si, Gyeonggi-Do (KR)
(72) Inventor: Park, Chan-Soo, Yeongtong-gu Suwon-si Gyeonggi-do (KR); Park, Seong-Kyoo, Yeongtong-gu Suwon-si Gyeonggi-do (KR)
(74) Representative: Walaski, Jan Filip

(57) **Abstract**

The invention provides an apparatus and method for transmitting data in a facsimile machine, by which a Radio Frequency Identification (RFID) reader reads user personal information from an RFID tag carried by a user and attaches the user personal information to Transmit Terminal Identification (TTI) information so that the user personal information can be transmitted on the TTI information to a receiving facsimile machine. In this manner, the receiving facsimile machine can print the user personal information when printing the image data of a facsimile document so that a receiver can easily recognize who sent the facsimile document. Furthermore, since the receiver can easily recognize the personal information of the user who sent the facsimile document, the received facsimile document can be managed effectively.

## Description

The present invention relates to transmission of data over a communication link.

Particularly, but not exclusively, the present invention relates to an apparatus and a method for transmitting data in a facsimile machine, by which a Radio Frequency Identification (RFID) reader reads user personal information from an RFID tag carried by a user and attaches the user personal information to Transmit Terminal Identification (TTI) information, so that the user personal information can be transmitted on the TTI information to a receiving facsimile machine, and thus the receiving facsimile machine can print the user personal information when printing the image data of a facsimile document, so that a receiver can easily recognize who sent the facsimile document.

Generally, in transmission of text data in a facsimile communication system, a transmitting facsimile machine transmits transmitting facsimile-related information such as an identification code for identifying the transmitting facsimile machine, transmission time and transmitted page information together with scanned image data to a receiving facsimile machine via a network. The transmitting facsimile-related information is generally referred to as Transmit Terminal Identification (TTI) information.

During document transmission, the receiving facsimile machine receives the TTI information from the transmitting facsimile machine, and prints corresponding TTI information on a top portion of pages of the facsimile document.

A conventional apparatus and method for transmitting data in a facsimile machine, for transmitting Transmit Terminal Identification (TTI) information and image data will now be described in more detail with reference to the accompanying drawings.

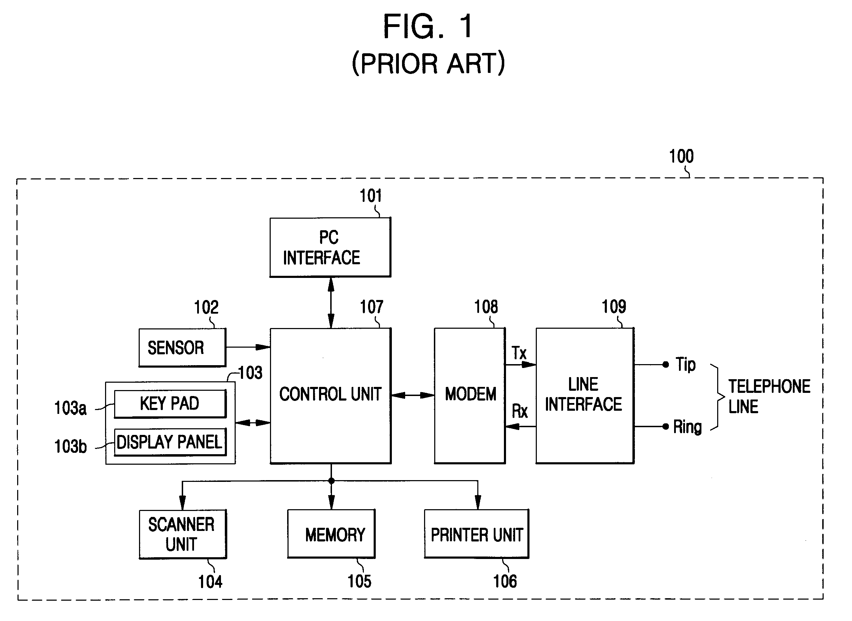

Figure 1 is a block diagram illustrating a conventional apparatus for transmitting data in a facsimile machine.

As shown in Figure 1, a facsimile machine 100 includes a sensor 102, an Operation Panel (OPE) 103, a scanner unit 104, a memory 105, a printer unit 106, a control unit 107, a modem 108 and a line interface 109. The OPE 103 includes a keypad 103a and a display panel 103b.

The sensor 102 senses the remaining amount of recording sheets or document data, and provides the sensed amount or data to the control unit 107.

The key pad 103a of the OPE 103 provides the control unit 107 with key input signals corresponding to the telephone number of a receiving facsimile machine or other data which are needed for data transmission, the display panel 103b displays the telephone number of the receiving facsimile machine dialed via the key pad 103a, page information for a document to be transmitted and present facsimile machine operation status.

As a document to be transmitted is loaded and a transmission key signal is input from a user via the key pad 103a, under the control of the control unit 107, the scanner unit 104 picks up the loaded document, scans the document, converts an image of the document into digital image data, and provides the converted digital image data to the control unit 107.

The memory 105 stores program data, protocol data and text data, and accesses or stores the data under the control of the control unit 107. The memory 105 also stores the TTI information of a transmitting facsimile machine set by a user as mentioned above. The TTI information includes the telephone number of the transmitting facsimile machine. When data transmission is actually performed, the data transmission time and the page information of the TTI information as above are created by the control unit 105, attached to the TTI information read from the memory 105, and transmitted on the TTI information to the receiving facsimile machine.

The printer unit 106 prints scanned data stored in the memory 105 under the control of the control unit 107 such as for a copying function, and prints image data received from a counterpart facsimile machine.

The modem 108 demodulates analog image data received via a public switched telephone network (PSTN) into digital data, provides the digital data to the control unit 107, and modulates digital image data provided from the control unit 107 into analog signals for transmission via the line interface 109 to a receiving facsimile machine.

The line interface 109 forms a calling loop for the PSTN under the control of the control unit 107, and interfaces data between the modem 108 and the PSTN.

The control unit 107 temporarily stores facsimile data received via the modem into the memory 105, accesses and provides the stored facsimile data to the printer unit 106 so that the facsimile data can be printed by the printer unit 106, and stores TTI information or facsimile information, which is input by a user at the time of installing a facsimile machine, into a memory area.

The control unit 107 reads scanned image data from the memory 105, and transmits the image data via the modem 108 to the facsimile machine in such a manner that TTI information stored in a different area of the memory 105 or a different memory is attached to the image data in transmission. The TTI information stored in the memory 105 can, for example, include a unique ID of the transmitting facsimile machine, the telephone number of the transmitting facsimile machine, the telephone number of a receiving facsimile machine dialed by a user, data transmission time or page information of a facsimile document.

The operation of a conventional apparatus for transmitting data in a facsimile machine constructed as above will now be described. Reference will now be made mainly to those components and their operations which are related to the transmitting apparatus without describing those which are not related to the transmitting apparatus.

As transmitted according to the above process, the document is received by a receiving facsimile machine.

That is, TTI information is printed on a top portion of a printing sheet, and contains transmission time, the telephone number of a transmitting facsimile machine, the telephone number of the receiving facsimile machine and page information.

As a result, the conventional apparatus for transmitting data in a facsimile machine as described above has a problem in that a receiving part of a facsimile document may not recognize who sent the document since TTI information sent by the transmitting facsimile machine contains only transmission time, telephone number of a transmitting facsimile machine, telephone number of a receiving facsimile machine and page information. For example, when a number of users use a transmitting facsimile machine, since only the telephone number of a transmitting facsimile machine is transmitted and printed as TTI information, it is difficult to identify a person who transmitted a facsimile document based solely on the printed telephone number information.

Accordingly, the facsimile user who attempts to transmit the facsimile document additionally produces a facsimile cover sheet on which the name of the user is written. This, as a result, increases the size of the facsimile document and thus facsimile transmission time.

The present invention aims to address the above problem.

According to the present invention, there is provided a method of providing information for identifying a user of a data transmission apparatus, the data transmission apparatus being operable to transmit data over a communication link, the method comprising reading user information stored in a user Radio Frequency Identification RFID tag and transmitting the data and the read user information over the communication link.

According to the invention, there is also provided data transmission apparatus for providing information for identifying a user of the apparatus, comprising a Radio Frequency Identification (RFID) reader for reading user information stored in a user RFID tag and means for transmitting the data and the read user information over a communication channel.

Embodiments of the present invention provides an apparatus and a method for transmitting data in a facsimile machine, by which a Radio Frequency Identification (RFID) reader reads user personal information from an RFID tag carried by a user and attaches the user personal information to Transmit Terminal Identification (TTI) information so that the user personal information can be transmitted on the TTI information to a receiving facsimile machine, and thus a receiver can easily recognize who sent the facsimile document.

According to an exemplary aspect of the invention for realizing the above objects, there is provided a method for transmitting data in a facsimile machine by scanning a document, the method comprising steps of reading user information stored in a user RFID tag by a RFID tag reader, and transmitting the scanned document and the read user information to a receiving facsimile machine.

Preferably, the transmitting step comprises transmitting the user information on TTI information.

Preferably, the transmitting step comprises storing the read user information in a TTI information area of a memory, and combining the stored TTI information with an image data of the scanned facsimile document into a transmission data format and transmitting the transmission data format to the receiving facsimile machine.

Preferably, the transmitting step comprises transmitting the user information read from the RFID tag by the RFID tag reader and the user information previously registered in the TTI information area to the receiving facsimile machine according to user selection.

Preferably, the user information comprises at least one selected from the group consisting of the name of a facsimile transmitter, company/team name to which the facsimile transmitter belongs, wired/wireless telephone number of the facsimile transmitter, Internet Protocol (IP) address of a transmitting part and E-mail address of the facsimile transmitter.

Preferably, the user information-reading step comprises requesting user information input, and performing wireless communication with the user tag through the RFID reader installed in the facsimile machine to read the user information stored in the RFID tag.

In addition, the user information-requesting step may be performed based upon at least one of a message display and voice output.

According to an exemplary aspect of the invention for realizing the above objects, there is provided an apparatus for transmitting data in a facsimile machine by scanning a document, comprising a RFID reader for reading user information stored in a user RFID tag, and a data processor for transmitting the scanned document and the read user information toward a receiving facsimile machine.

Preferably, the data processor is adapted to transmit the user information on Transmit Terminal Identification (TTI) information.

Preferably, the data processor comprises a memory for storing the user information read by the RFID reader into a previously registered TTI information storage area, and a controller for storing the user information read by the RFID reader into the previously registered TTI information area, reading TTI information including the user information stored in the memory, combining the read TTI information with an image data of the scanned facsimile document, and transmitting the combined data to the receiving facsimile machine.

Preferably, the controller is adapted to transmit the user information previously registered in the TTI information area of the memory and the user information read by the RFID reader to the receiving facsimile machine according to user selection. Preferably, the user information comprises at least one selected from the group consisting of the name of a facsimile transmitter, company/team name to which the facsimile transmitter belongs, wired/wireless telephone number of the facsimile transmitter, IP address of a transmitting part and E-mail address of the facsimile transmitter.

In addition, the apparatus of the invention may further comprise a display for displaying a message that requests input of the user information stored in the RFID tag; and a voice output unit for outputting a previously stored voice message that requests input of the user information stored in the RFID tag.

Embodiments of the invention will now be described by way of example with reference to the accompanying drawings, in which:
Figure 1 is a schematic block diagram illustrating a conventional apparatus for transmitting data in a facsimile machine;
Figure 2 is a schematic illustration of an exemplary data transmission flow in a facsimile data communication system according to an embodiment of the present invention;
Figure 3 is a schematic block diagram illustrating an exemplary apparatus for transmitting data in a facsimile machine according to an embodiment of the present invention;
Figure 4 is a flowchart illustrating an exemplary method for transmitting data in a facsimile machine according to an embodiment of the present invention; and
Figure 5 illustrates an example of a Transmit Terminal Identification (TTI) information format which is printed out from a receiving facsimile machine according to an embodiment of the present invention.

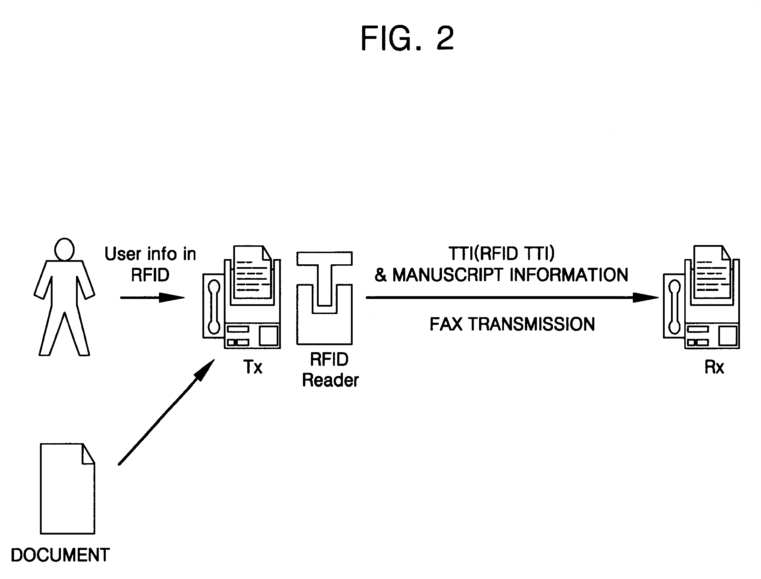

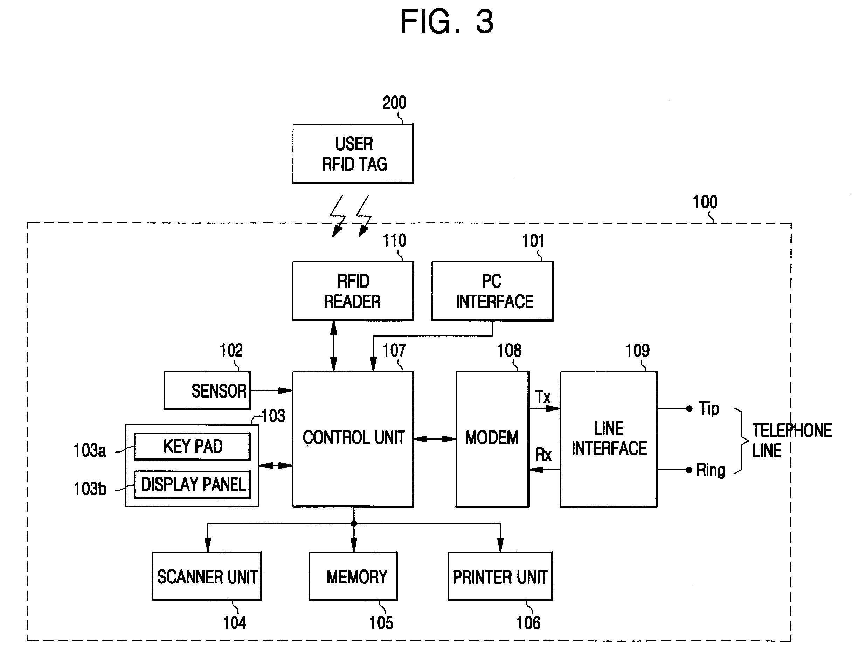

As shown in Figures 2 and 3, a facsimile machine 100 according to the invention includes an RFID reader 110 capable of wirelessly reading user information from RFID tags that are carried by users.

Radio Frequency Identification (RFI) is an advanced radio frequency based automatic identification technology. An RFID system comprises three components, a reader, a host computer and a tag or transponder.

RFID tags receive and respond to radio frequency signals from an RFID reader. The response includes the tag id and any data stored in the tag. This data is transmitted to the host computer, which compares the received data to data previously stored in a database, to provide a desired service.

In transmission of a facsimile document, the RFID reader 110 reads user information from a user RFID tag, attaches the user information to Transmit Terminal Identification (TTI) information, and transmits both the TTI information and the user information with the image data of a scanned facsimile document to a receiving facsimile machine.

The facsimile machine 100 according to an exemplary embodiment of the present invention will be described in more detail with reference to Figure 3.

As shown in Figure 3, the facsimile machine 100 of the invention comprises a sensor 102, an Operation Panel (OPE) 103, a scanner unit 104, a memory 105, a printer unit 106, a control unit 107, a modem 108, a line interface 109 and an RFID reader 110. The OPE 103 includes a keypad 103a and a display panel 103b, and the RFID reader 110 performs wireless communication with a user RFID tag 200.

The user RFID tag 200 is carried by a user 200, and has user information stored therein. The user information stored in the user RFID tag 200 may comprise various personal information such as user name, user telephone number, address and company/team name to which the user belongs.

The RFID reader 110 communicates with the RFID tag 200 in response to a control signal from the control unit 107 in order to provide the user information from the RFID tag 200 to the control unit 107.

The control unit 107 stores the user information from the RFID reader 110 into a storage area of the memory 105 or a TTI information storage area of an additional memory (not shown).

In addition, the control unit 107 stores the image data scanned by the scanner unit 104 into the memory 105, converts the image data together with the TTI information including the user personal information into a specific format, and transmits the image data with the TTI information via the modem 108 to a receiving facsimile machine. In this case, the image data and the TTI information are formatted so that the TTI information can be printed on a top portion of a printing sheet when the image data and the TTI information are printed by the receiving facsimile machine.

The control unit 107 also receives facsimile image data together with TTI information comprising user information via the modem 108 from a counterpart facsimile machine, stores the received image data and TTI information into the memory 105, and sequentially reads and provides the image data and TTI information to the printer unit 106 so that the image data and TTI information can be printed on a printing sheet. When the image data and TTI information are printed on the printing sheet such as paper, the TTI information is printed on a top portion of the printing sheet, which comprises user information together with the TTI information. The user information may comprise at least one of the group consisting of facsimile transmission time, telephone number of a transmitting facsimile, facsimile user name, company/team name to which the user belongs, mobile telephone number of the user, Internet Protocol (IP) address of the user and E-mail address of the user.

Reference will now be made to the operation of the apparatus for transmitting data in a facsimile machine according to an exemplary embodiment of the present invention comprising the above described components.

First, when a facsimile document to be transmitted to a receiving facsimile machine is loaded onto a transmitting facsimile machine by a user, the sensor 102 senses the facsimile document and provides a sensing signal to the control unit 107.

As the user inputs the telephone number of the receiving facsimile machine via the keypad 103a, the control unit 107 attempts a call connection with the receiving facsimile machine via the modem 108.

When a call connection to the receiving facsimile machine is established and an audible ring is heard, the user inputs a send key on the keypad 103a to initialize document transmission.

When the send key is input, the control unit 107 provides a control signal to the scanner unit 104, which in turn picks up the loaded document and scans images from the document in response to the control signal from the control unit 107.

The scanner unit 104 provides scanned image data to the control unit 107, and then, the control unit 107 stores the image data from the scanner unit 104 into an image data storage area of the memory 105.

When the first page of the facsimile document is scanned, the control unit 107 requests user information input via the display panel 103b. That is, under the control of the control unit 107, the display panel 103b displays a message requesting the user to touch a user RFID tag 200 carried by the user to the RFID reader 110 or to move the user RFID tag 200 in range of the RFID reader 110.

Upon recognizing the displayed message, the user contacts or touches the RFID tag 200 to the RFID reader 110 or moves the RFID tag 200 in range of the RFID reader 110.

Then, the RFID reader 110 performs communication with the RFID tag 200 to read user information from the RFID tag 200, and provides the read user information to the control unit 107.

Alternatively, the control unit 107 may not display a request message for user information input, but the RFID reader 110 may periodically transmit a signal to perform communication with the user RFID tag 200 and read user information from the user RFID tag 200. In addition, such an input request message may be displayed via the display panel 103b as a warning message when a response signal is not received from a RFID tag even after signals have been sent to the RFID tag for a predetermined time period. Alternatively, instead of displaying the input request message, a voice output unit such as a speaker may be used to output a voice message requesting user information input. Then, the voice message requesting user information input may be pre-stored in the memory.

The control unit 107 attaches the user information provided from the RFID reader 110 to TTI information which is pre-registered in the memory 105.

Then, the control unit 107 mixes the TTI information having the user information attached thereto from the memory 105 with the scanned image data to transmit the mixed data to the receiving facsimile machine. In this case, the user information previously registered in the memory 105 and the user information read from the RFID tag from the RFID reader 110 can be selectively transmitted to the receiving facsimile machine according to user selection.

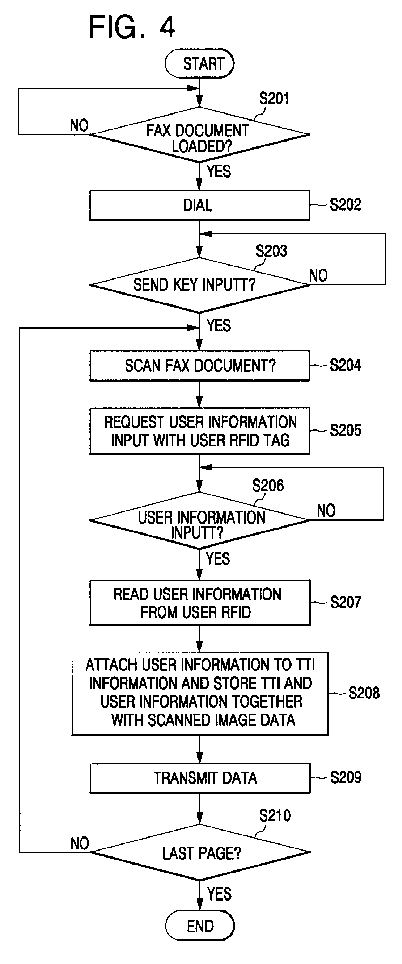

A method for transmitting data in a facsimile machine of the invention corresponding to the above operation will now be described in more detail with reference to Figure 4.

Figure 4 is a flowchart illustrating a method for transmitting data in a facsimile machine according to the invention.

As shown in Figure 4, in step S201, it is determined whether a facsimile document to be transmitted to a receiving facsimile machine is loaded.

If the facsimile document to be transmitted is loaded, a user dials the telephone number of a receiving facsimile machine to attempt call connection in step S202.

If call connection to the receiving facsimile machine is established, it is determined whether a send key for initializing facsimile document transmission is input from the user in step S203.

If the send key is input, the loaded facsimile document is picked up and scanned and then the scanned image data are sequentially stored into an image data area of a memory in step S204.

Then, in S205, a message for requesting user information input is displayed to the user who attempts to transmit the facsimile document. That is, the displayed message requests the user to contact an RFID tag carried by the user to a RFID reader or move the RFID tag within a predetermined distance from the RFID reader. Instead of displaying the message to request user information input from the user, it is possible to produce a voice message via a speaker (not shown) mounted on the facsimile machine.

Then, it is determined whether the user information is input in S206. That is, the RFID reader reads out user information from the RFID tag carried by the user via wireless communication in step S207. In this case, the user information stored into the RFID tag may comprise at least one selected from the group consisting of user name, telephone number and company/team name to which the user belongs to, IP address of a transmitting part (user) and E-mail address of the user.

In step S208, the read user information is attached to TTI information which is previously registered to a TTI information area of the memory, and the TTI information having the user information attached thereto and the scanned image data are read from the memory, converted into a transmission format, and stored into the memory. In this case, the data and the information are so formatted that the TTI information can be printed on a top portion of a printing sheet when they are printed by the receiving facsimile machine.

In step S209, the formatted data and information are transmitted to the receiving facsimile machine via a network.

In step S210, it is determined whether a present document page to be transmitted is the last page of the facsimile document, if the present document page is the last page, data transmission is terminated, and if not, remaining document pages are sequentially scanned to transmit scanned image data together with the TTI information comprising the user information to the receiving facsimile machine via the network according to the same operation as above. In this case, the network includes the public switched telephone network (PSTN).

The user information only needs to be obtained once at the start of the transmission process, so it will be evident that steps S205 to S207 are omitted when the remaining document pages are scanned and transmitted.

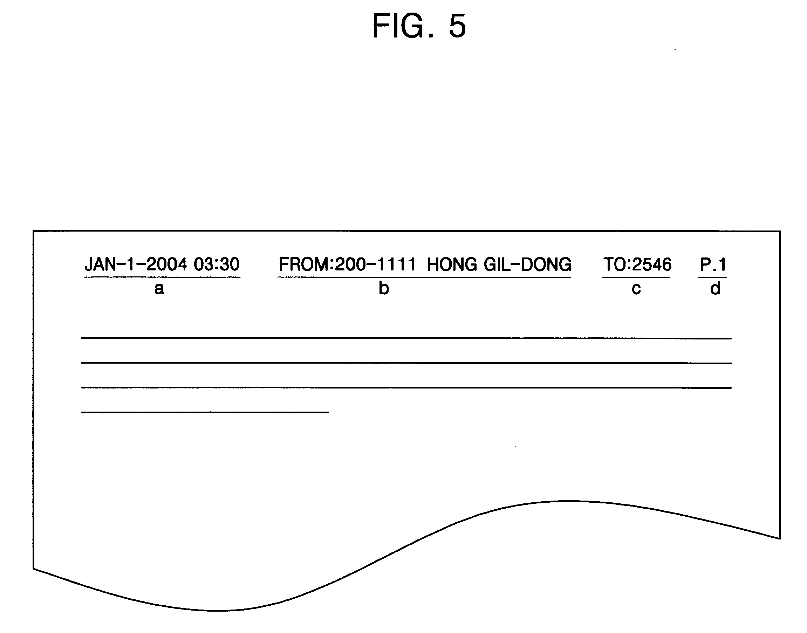

When the facsimile image data is transmitted according to the above process, the receiving facsimile prints the received TTI information on a top portion of a printing sheet as shown in Figure 5. Figure 5 illustrates an example of the TTI information format which is printed out from a receiving facsimile machine according to an embodiment of the present invention.

The TTI information as shown in Figure 5 comprises (a) transmission time, (b) telephone number of a transmitting facsimile machine, (c) telephone number of a receiving facsimile machine and (d) page information, and further comprises the user name added to the transmitting facsimile telephone number. Although only the user name was illustrated as the user information in Figure 5, it is to be understood that other user personal information such as the user telephone number, the company/team name to which the user belongs, the IP address of a transmitting part (user) and the e-mail address of the user may also be printed.

According to the exemplary apparatus and method for transmitting data in a facsimile machine according to an embodiment of the present invention as described above, the RFID reader reads user personal information from an RFID tag carried by a user and attaches the user personal information to TTI information so that the user personal information can be transmitted together with or as part of the TTI information to a receiving facsimile machine. In this manner, the receiving facsimile machine can print the user personal information when printing the image data of a facsimile document so that a receiver can easily recognize who sent the facsimile document.

While exemplary implementations according to the present invention have been shown and described with reference to exemplary embodiments thereof, it will be understood by those skilled in the art that various changes in form and details may be made without departing from the scope of the invention as defined by the appended claims.

In particular, while the above embodiments refer to a facsimile apparatus, the invention extends to any data transmission apparatus.

## Claims

1. A method of providing information for identifying a user of a data transmission apparatus (100), the data transmission apparatus being operable to transmit data over a communication link, the method comprising:
reading user information stored in a user Radio Frequency Identification RFID tag (200); and
transmitting the data and the read user information over the communication link.

2. A method according to claim 1, further comprising associating the user information with transmission related information, which when received by a data receiving apparatus, is arranged to be displayed separately from the transmitted data.

3. A method according to claim 2, wherein the transmission related information comprises Transmit Terminal Identification (TTI) information.

4. A method according to any one of the preceding claims, wherein the transmitting step comprises:
storing the read user information in a Transmit Terminal Identification (TTI) information area of a memory (105); and
combining the stored TTI information with image data of a scanned facsimile document into a transmission data format and transmitting the transmission data format to a receiving facsimile machine.

5. A method according to claim 4, wherein the transmitting step comprises:
transmitting the user information read from the RFID tag by the RFID tag reader and the user information previously registered in the TTI information area to the receiving facsimile machine according to a user selection.

6. A method according to any one of the preceding claims, wherein the user information comprises one or more of the name of a facsimile transmitter, a company orteam name to which the facsimile transmitter belongs, a wired orwireless telephone number of the facsimile transmitter, Internet Protocol (IP) address of a transmitting part and e-mail address of the facsimile transmitter.

7. A method according to any one of the preceding claims, wherein the user information-reading step comprises:
requesting user information input; and
performing wireless communication with the user tag through an RFID reader installed in the data transmission apparatus.

8. A method according to claim 7, wherein the user information-requesting step is performed based upon at least one of a message display and a voice output.

9. Data transmission apparatus (100) for providing information for identifying a user of the apparatus, comprising:
a Radio Frequency Identification (RFID) reader for reading user information stored in a user RFID tag; and
means for transmitting the data and the read user information over a communication channel.

10. Apparatus according to claim 9, comprising a facsimile machine for transmitting a scanned document.

11. Apparatus according to claim 10, further comprising means for associating the user information with transmission related information for transmission, the transmission related information being arranged to be displayed separately from the scanned document when received at a receiving facsimile machine.

12. Apparatus according to claim 11, wherein the transmission related information comprises Transmit Terminal Identification (TTI) information.

13. Apparatus according to claim 9, further comprising:
a memory (105) for storing the user information read by the RFID reader into a previously registered Transmit Terminal Identification (TTI) information storage area; and
a controller for storing the user information read by the RFID reader into the previously registered TTI information area, reading TTI information comprising the user information stored in the memory, combining the read TTI information with image data of the scanned document, and transmitting the combined data to a receiving facsimile machine.

14. Apparatus according to claim 13, wherein the controller is adapted to transmit the user information previously registered in the TTI information area of the memory and the user information read by the RFID reader to the receiving facsimile machine according to user selection.

15. Apparatus according to any one of claims 9 to 14, wherein the user information comprises the name of a facsimile transmitter, company/team name to which the facsimile transmitter belongs, wired/wireless telephone number of the facsimile transmitter, Internet Protocol (IP) address of a transmitting part or an e-mail address of the facsimile transmitter.

16. Apparatus according to any one of claims 9 to 15, further comprising:
a display for displaying a message that requests input of the user information stored in the RFID tag.

17. Apparatus according to any one of claims 9 to 16, further comprising:
a voice output unit for outputting a previously stored voice message that requests input of the user information stored in the RFID tag.
